# EUROPEAN PATENT SPECIFICATION

(11) **EP 4 281 209 B1**
(45) Date of publication and mention of the grant of the patent: **05.11.2025**
(21) Application number: 22702431.2
(22) Date of filing: 24.01.2022
(51) Int. Cl.: B01D 61/14, B01D 61/18, B01D 63/16, B01L 3/00, B01D 63/08

(54) **FILTER**
FILTER
FILTRE

(30) Priority: 22.01.2021 EP 21153067; 08.06.2021 EP 21178240
(43) Date of publication of application: 29.11.2023
(73) Proprietor: Reardon, Paul Charles, High Wycombe, Buckinghamshire HP12 3PY (GB)
(72) Inventor: Reardon, Paul Charles, High Wycombe, Buckinghamshire HP12 3PY (GB)
(74) Representative: Schlich
(86) International application number: PCT/EP2022/051504
(87) International publication number: WO 2022/157366

(56) References cited:
- WO-A1-2009/042023
- WO-A1-2014/190249
- WO-A1-2016/097818
- WO-A1-2020/112502
- GB-A- 2 186 205
- US-A- 3 488 768
- US-A- 4 522 713
- US-A- 4 832 851
- US-A1- 2013 313 184
- US-B1- 6 719 896

## Description

The present invention relates to methods for filtration of liquids with molecules and/or macromolecules contained therein, wherein the devices comprise a reservoir for the liquid to be filtered and a semipermeable membrane through which the filtrate passes and the retentate does not. Accordingly, the invention also relates to methods of filtering liquids comprising molecules and/or macromolecules. In particular the invention relates methods where filtration is augmented or enabled by filtering the liquid while under pressure or acceleration (e.g. where force urging the liquid to be filtered through the semipermeable membrane is provided by acceleration generated by centrifugation or by positive or negative pressure being applied to the liquid to be filtered). Further, the invention relates to methods and tools for manufacturing devices for carrying out a method of the invention.

Purifying, concentrating and/or isolating molecules and/or macromolecules from solutions has long been a central concern in the fields of chemistry, biochemistry, molecular biology, biology, and physiology.

In particular, has long been a need in the fields of biology, biochemistry, molecular biology and genetics for the simple and effective processing of solutions comprising molecules and/or macromolecules by way of purifying, concentrating and/or isolating such molecules from the liquid in which they are comprised. Passing such solutions through semipermeable ultrafiltration membranes using centrifugal force as a driver has been utilised since the 1970s for these purposes, i.e. purification, concentration, and isolation of macromolecules from solutions.

Particular applications of this technology exist such as isolation of proteins from liquid biological media or samples of body fluid, concentration of protein samples or to produce a protein-free filtrate.

Such methods are reviewed in U.S. Pat. No. 3,488,768 (Rigopulos, 1970). Whilst these methods are useful they have consistently been found to be deficient owing to producing low yields, absorption of the molecules and/or macromolecules onto the membrane due to the force "caking" sample on to the membrane (i.e. the tendency of the concentrated molecules and/or macromolecules to form lumps or masses on the membrane and thus wholly or partially blocking or otherwise occluding the semipermeable membrane) and the technical difficulties associated with removing the filtered or retained products from the vessels of devices having one or more of these disadvantages.

Further examples of similar devices, techniques and technologies utilising selective centrifugation of liquid comprising molecules or macromolecules wherein the liquid is driven through a semipermeable membrane by the action of an applied centrifugal force are found in: US3488768 (Rigopulos); US3832141 (Haldopoulos); US4035150 (Jaffe); US4159251 (Wrasidlo); US4483825 (Fatches); US4522713 (Nussbaumer); US4632761 (Bowers); US4702834 (Relyea); US4231865 (Spiegler); US5552325 (Nochumson); US6375855 (Vassarotti); and US6837995 (Vassarotti).

Examples of similar devices, techniques and technologies utilising the application of gas pressure on liquid comprising molecules or macromolecules to drive the liquid through a semipermeable membrane are also found in: US6375855 (Vassarotti); and US6837995 (Vassarotti).

Typically devices in this field have semipermeable membranes that are horizontally positioned. Vertically positioned membranes are also employed and in these cases the membrane active layer faces towards the interior of the device and are flat faced (see US6375855 (Vassarotti); and US6837995 (Vassarotti)).

Bowers (US4632761) considers the use of a reverse membrane located in reverse position to that which is standard. However, notably the utility of Bowers is limited due to the large hold up volume and the need to decant filtrate from the filtrate reception vessel several times during the filtration process to obtain a desired final concentration factor.

In this context, the hold-up volume of a filtration device is the volume of liquid that has been processed but is retained in the filtration device following the recovery step, e.g. because of the configuration design of the device. Accordingly, the hold-up volume of liquid is the portion of the processed fluid which cannot usefully be obtained by the user of the device.

WO 2009/042023 describes a filtration device suited for concentration of liquid samples. The device includes a housing having a sample reservoir, and two substantially vertically oriented and spaced apart membranes disposed in the housing. An underdrain is associated with each membrane such that fluid passing through each membrane flows through a respective underdrain into a filtrate collection chamber.

US 6,719,896 describes a fluid-filtration apparatus for use in centrifugal sample concentration protocols wherein specifiable degrees of sample concentration are sought. The fluid-filtration apparatus is provided with an integral semi-permeable drain capable of being either completely or variably unsealed by a user to allow selective draining of a predetermined corresponding volume of said liquid from said receptacle. The fluid-filtration apparatus is used in combination with a filtrate collection vial. The fluid-filtration apparatus fits at least partially within the vial such that liquid (i.e., filtrate) drained from said receptacle collects within said vial.

US 2013/0313184 describes a filtration container for concentration of macromolecules that is insertable into a filtrate recovery tube. The filtration container comprises an upper portion that forms a sample container, which is hollow-cylindrical and has an inlet opening on its upper end face, a downwardly tapering central portion comprising a filtration chamber, which has two mutually opposed main walls running downwardly towards one another and also two gusset-like connection walls connecting said main walls at the lateral edges thereof, at least one of the main walls having a filter window for receiving a planar membrane filter.

WO 2016/097818 describes a filtration system for a liquid comprising a container having an internal container volume, a particulate filter portion for allowing passage of the liquid into the internal container volume and a first opening providing access to the internal container volume. The filtration system further comprises a non-porous housing forming an internal space for receiving the container.

An object of the present disclosure is to provide improved devices for chemistry, biochemistry, molecular biology, biology, genetics at and/or physiology for selectively filtering molecules and macromolecules from liquid solutions. In particular an object of the present disclosure is to provide devices of this type and function that operate by the filtrate being moved through a semipermeable membrane, such as an ultrafiltration membrane, by forces being applied to the filtrate such as those provided by the acceleration of a centrifuge and/or a gas under pressure.

The disclosure also provides a device for installation in a cooperating receptacle comprising:
a vessel with side walls and a base;
wherein the side walls of the vessel comprise at least one portal;
wherein the portal is partially or wholly covered by an ultrafiltration membrane comprising a filtering surface;
wherein the ultrafiltration membrane comprises a semi-permeable, polymeric membrane layer cast onto a backing material, which provides support for the semi-permeable polymeric membrane layer;
wherein the semipermeable membrane is located vertically with respect to the receptacle when the device is installed in the receptacle; and
wherein the filtering surface of the ultrafiltration membrane faces externally with respect to the interior of the vessel,
wherein the receptacle is for pressurisation, evacuation, and/or acceleration by centrifugation.

An object of the present invention is to provide improved methods for chemistry, biochemistry, molecular biology, biology, genetics at and/or physiology for selectively filtering molecules and macromolecules from liquid solutions. In particular an object of the present invention is to provide methods whereby the filtrate is moved through a semipermeable membrane, such as an ultrafiltration membrane, by forces being applied to the filtrate such as those provided by the acceleration of a centrifuge and/or a gas under pressure.

Accordingly, the invention provides a method for processing liquids or suspensions comprising the steps of:
installing a device in a cooperating receptacle for pressurisation, evacuation and/or acceleration by centrifugation, wherein the device comprises:
   a vessel with side walls and a base;
   wherein the side walls of the vessel comprise at least one portal;
   wherein the portal is partially or wholly covered by an ultrafiltration membrane comprising a filtering surface;
   wherein the ultrafiltration membrane comprises a semi-permeable, polymeric membrane layer cast onto a backing material, which provides support for the semi-permeable polymeric membrane layer;
   wherein the ultrafiltration membrane is located vertically with respect to the receptacle when the device is installed in the receptacle and
   the filtering surface of the ultrafiltration membrane faces externally with respect to the interior of the vessel,
adding the liquid or suspension for processing to the receptacle; and subjecting the resulting assembly of parts to centrifugation, increased *g* forces, vacuum and/or pressurisation thus facilitating a flow of filtrate from the receptacle to the interior of the vessel.

Also described herein is a device for insertion in a receptacle comprising:
a vessel with side walls and a base;
wherein the side walls of the vessel comprise at least one portal;
wherein the portal is partially or wholly covered by a semipermeable membrane;
wherein the semipermeable membrane is located vertically with respect to the receptacle for centrifugation; and
wherein the filtering surface of the semipermeable membrane faces externally with respect to the interior of the vessel,
wherein the receptacle is for pressurisation, evacuation, and/or acceleration by centrifugation.

Also described herein is a device for insertion in a receptacle comprising:
a vessel with side walls and a base;
wherein the side walls of the vessel comprise at least one portal;
wherein the portal is partially or wholly covered by a semipermeable membrane comprising a filtering surface;
wherein the semipermeable membrane is located vertically with respect to the receptacle; and
wherein the filtering surface of the semipermeable membrane faces externally with respect to the interior of the vessel,
wherein the receptacle is for pressurisation, evacuation, and/or acceleration by centrifugation.

Centrifugation is defined as rotating an apparatus around a central axis so as to produce radial acceleration and corresponding forces within the apparatus (i.e. centrifugal force).

Pressurisation is defined as producing or maintaining a raised pressure artificially in a gas or its container. Preferably this raised pressure is greater than atmospheric pressure, most preferably this raised pressure is greater than ambient atmospheric pressure.

Evacuation is defined as producing or maintaining a lowered pressure artificially in a gas or its container, i.e. a vacuum or partial vacuum. Preferably this lowered pressure is less than atmospheric pressure, most preferably this lowered pressure is less than ambient atmospheric pressure.

Thus the invention specifically relates to methods for filtration of a fluid by facilitating the flow of filtrate from a reservoir outside the device (typically in the receptacle for centrifugation or gas pressure) to the inside portion ("vessel") of the device. That is, the composition to be filtered may be placed in an outer container and the filter device for receiving filtrate immersed in said liquid.

When coupled with centrifugal force or the application of gas pressure on the liquid this immersion allows filtrate to migrate from the outer reservoir into the interior volume of the immersed filter device.

Alternatively, or in addition, the vessel may be evacuated, preferably partially evacuated, so facilitating the flow of filtrate from the reservoir outside the device to the inside portion ("vessel") of the device. That is, the composition to be filtered may be placed in an outer container and the filter device for receiving filtrate immersed in said liquid, wherein the interior of the filter device is evacuated to draw filtrate through the semipermeable membrane of the device.

This has the advantage of forcing the flow of filtrate to move laterally from the reservoir of liquid to be processed into the filtration vessel through the semipermeable membrane. This lateral movement within the tube yields the advantage of the area of the semipermeable membrane being limited by the length and circumference of the device and the receptacle for centrifugation or pressurisation that it is intended to be inserted into rather than by the smaller area of the diameter/transverse cross section of the receptacle for centrifugation (typically a centrifuge or laboratory tube with a circular cross section). Hence a greater area of semipermeable membrane can be made available for filtration. This has the advantages of greater filtration rate (flux) and lower chances of blocking, fouling, or saturating the semipermeable filter compared with filters having smaller areas.

Accordingly this allows the further advantage of a reservoir of filtrate that is at least at the same level of the liquid being filtered and so is accessible directly following the filtering process. This access to the filtrate may be from the top of the tube and preferably via a tube or other portal to the filtrate reservoir of the vessel. Even more preferably this reservoir is accessible by pipette and the filtrate can be removed in this way. Accordingly, the base of the vessel of the device may be sealed.

Alternatively, or in addition, the base of the vessel of the device may have a hole or otherwise be perforated to provide an exit port for filtrate. Preferably this portal is at the base, the lower tip of the device, or at the lowest point of the vessel when the device is installed in a receptacle. Accordingly, the tip or lowest point of the receptable may also have a hole, preferably in a cooperating or aligned position with respect to the hole in the base of the vessel of the device. This allows the advantage of conveniently collecting filtrate that flows to the base of the vessel. Preferably collection means is located or installed on or below the receptacle to collect the filtrate. The collection means may be a further receptacle or container or may be a tube or pipe linked to the discharge point of the receptable or device.

Accordingly, a tube, or conduit linked in fluid connection to the discharge point of the receptable or device may be used to evacuate liquid, preferably gas, from all part of the apparatus by linking the tube, pipe, or conduit to a vacuum source. Preferably liquid, most preferably gas, is thus evacuated from the vessel of the device.

A seal may be located in the interior of receptacle such that installation of the device in the receptable causes the seal to form a barrier provided between the upper sample reservoir and the volume leading to the exit port in the base of the receptacle. The base of the device may be shaped so that it sits in the seal. Preferably the seal is annular (e.g. an O-ring seal) or otherwise follows the interior surface of the receptacle or the outer surface of the device. Most preferably the base of the device protrudes through a void or hole in the seal in order to be seated therein. This has the advantage of stable placement of the device within the seal without the sealing process affecting the spacing of the device from the inner wall of the receptacle. This has the further advantage of the seal being compressed, and thus improved, when the apparatus is accelerated, pressurised, or subjected to vacuum causing the device to be urged towards the base of the receptacle and against the material of the seal. As such the seal may be equivalent to a gasket preventing mixing of the sample and filtrate.

An advantage of increased semipermeable membrane area is optimised membrane contact time. Higher membrane contact time results in greater non-specific absorption onto the membrane. Furthermore, a higher contact time causes a greater degree of degradation of proteins comprised in fluids processed via the semipermeable membrane. A further advantage of increased semipermeable membrane area is a lower rate of fouling of the membrane due to, e.g. caking of material on the membrane.

A still further advantage is that the device allows minimal loss of sample by reverse filtration.

Accordingly, a particular advantage is that heavily particle-laden solutions are filtered very effectively by methods of the invention because such solutions do not block, foul and/or saturate, or otherwise occlude, the semipermeable membrane. This is a particular advantage in the field of protein crystallisation wherein micelles are formed in protein-containing solutions due to the detergents used. These micelles and then not removable through the use of conventional ultrafiltration concentrator devices. Thus the present devices and methods are advantageous in allowing filtration of both dilute solutions and particle-laden samples.

The semipermeable membrane is an ultrafiltration membrane with a support structure.

Ultrafiltration membranes may be constructed as a composite material in that the membrane comprises two or more substantially overlapping layers of material. Preferably these layers are laminated together. Typically materials produced by lamination of two or more layers are bonded together. Thus most preferably these overlapping layers are bonded together.

Typically, ultrafiltration (UF) membranes are comprised of a semi-permeable, polymeric membrane layer cast onto a uniform substrate, or backing material. Such a backing material provides a structural support for the semi-permeable, polymeric membrane layer (filtering layer) of the ultrafiltration membrane. The filtering layer thus has at least one surface (filtering surface) through which filtrate travels. The position of the filtering surface may define a boundary between a liquid to be filtered and the rest of the UF membrane. Alternatively, the filtering surface may be a structure that is internal to the UF membrane rather than being on the surface of the UF membrane. Therefore ultrafiltration membranes may be asymmetric in cross-section having: a filtering side, surface or face that is directed towards the unfiltered material; and a filtrate side, surface or face that is directed towards the filtrate that has transited the UF membrane. Ultrafiltration membranes can be made from materials including, but not limited to, the following: regenerated cellulose, Teflon^{™} (polytetrafluoroethylene; PTFE), polysulphone, polyethersulphone.

Typically, the ultrafiltration membrane comprises an active filtering layer of usually poly sulphone or regenerated cellulose. Preferably the active filtering layer comprises poly sulphone or regenerated cellulose. Most preferably the active filtering layer consists of poly sulphone or regenerated cellulose.

The semipermeable or ultrafiltration membrane may have a molecular-weight cut-off (MWCO) of 1000, 3000, 5000, 10,000, 20,000, 30,000, 50,000, 100,000, 200,000, 250,000, 300,000, 400,000, 500,000, or 800,000 Daltons, wherein 1 Dalton equals 1 gram per mole. Preferably the semipermeable or ultrafiltration membrane has a MWCO of 3,000, 10,000, 30,000 or 100,000 Daltons. Accordingly, methods of the invention are suitable for filtration and/or concentration of a wide variety of dissolved or suspended materials, particularly proteins.

The active filtering layer may be applied or cast onto a layer consisting or comprising a polypropylene filter medium to act as a support for the filtering layer and filtering surface defined by the exterior surface of the active filtering layer.

The support for the filtering surface may have a degree of porosity selected from one of the options in the tables of European and American porosity designations set out below.

### European Porosity Designations

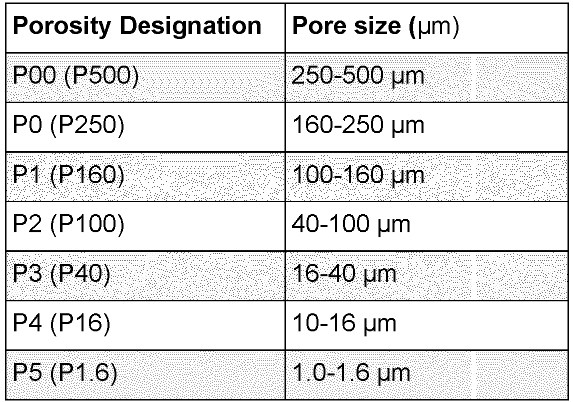

### American Porosity Designations

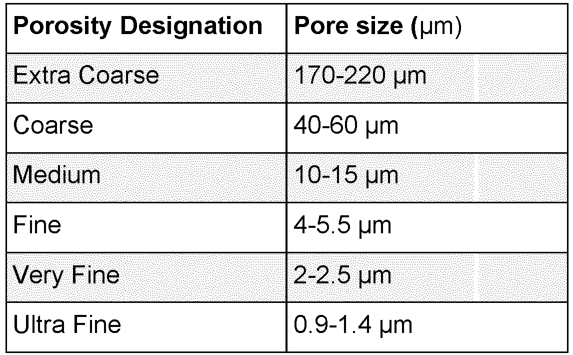

The polypropylene filter medium preferably has pores of 200 µm (microns). Pores of 200 µm have the advantage of enabling easier flow of liquid via the filter to the filtrate reservoir.

Devices described herein may be for installation in a centrifuge. Accordingly, it is preferred that the devices are installed in a receptacle that is also suitable for centrifugation. The receptacle for centrifugation may be sealed or unsealed, preferably by a cap, most preferably with a screw-top cap that cooperates with a threaded surface at the mouth of the receptacle.

A receptacle for centrifugation is preferably a vessel with a sealed base. The base of the receptacle may be flat or may be extended further in the form of a cone or hemisphere providing a volume of similar or proportional volume within the receptacle. Preferably the receptacle is sealed with a cap, most preferably a screw-top cap. This has the advantage that filtration can be carried out in a controlled environment.

Suitable receptacles that are in common use include, but are not limited to, laboratory tubes such as those made by Falcon^{™}, Greiner^{™} and Corning^{™}, and bespoke tubes may be employed. Typically Falcon^{™} (50 mL and 15 mL laboratory tubes), Sterilin^{™} (30 ml "Universal" tubes), and microfuge tubes (such as those manufactured by Eppendorf^{™} to contain 1.2, 1.5, or 2.0 mL volumes) may be used. Each of these standard tube types is typically available in a variant that has a substantially or completely conical base. Bases of this form have the advantage of providing a stable foundation for a component inserted into a tube which has a similarly shaped base. Conical bases also have the advantage of more efficiently gathering concentrate or retentate during a centrifugal recovery step for these materials.

The acceleration exerted on the device may be provided by centrifugation. Centrifugation is a mechanical process which involves the use of centrifugal force (e.g. provided by centripetal acceleration) to separate particles from a solution according to their size, shape, density, medium viscosity, and strength of the acceleration. In the case of centripetal acceleration this is defined by the speed of rotation of the centrifuge rotor and the objects borne thereby.) Components of such a mixed solution migrate away from the axis of the centrifuge at a rate determined by their density and/or relative buoyancy in the solution.

Acceleration forces are typically provided by way of centrifugation but other means of providing acceleration forces also fall within the scope of this disclosure.

The force of acceleration may be measured in terms of "g", i.e. the acceleration due to gravity at the surface of the Earth (which is approximately 9.8 ms⁻²).

The receptacles suitable for pressurisation may be sealed, preferably they are sealed, most preferably with a screw-top cap that cooperates with a threaded surface at the mouth of the receptacle.

Pressurisation of an apparatus is typically applied by linking a pressure vessel to a supply of gas under pressure. Supplies of pressurised gas are typically available in all laboratories. Accordingly, the supply of gas for pressurisation may be achieved by linking a pump to the apparatus to pressurise it and/or may be due to the natural expansion of compressed gas or the boiling of a liquified gaseous substance. The pump may be a syringe.

Receptacles suitable for pressurisation may comprise a pipe or conduit in fluid connection with the interior of the receptacle. A check or non-return valve may be installed as part of the path of this fluid connection. Preferably the pipe or conduit passes through the sealing means. Preferably the check or non-return valve is comprised in the sealing means. Most preferably the sealing means is a cap on the receptacle. Thus, advantageously, a multiplicity of filter apparatuses can be serially pressurised from a single supply of gas under pressure. An additional advantage is that a multiplicity of receptacles suitable for pressurisation may be conveniently connected to a pressure manifold so that multiple filtrations can be carried out at once.

Various types of pressurised gas are available typically. Preferably the pressurised gas is nitrogen, argon, or another inert gas. Most preferably the pressurised gas is nitrogen. Such gases are advantageous in not reacting or otherwise affecting the chemical nature of the substances being filtered or the resulting filtrate. However, compressed air may be used. Other gases that may be used may be selected from air, oxygen, carbon dioxide, helium, neon, krypton, and xenon.

The force due to pressurisation may be measured in terms of Pascals (Pa), pounds per square inch (psi), bars, or atmospheres. The degree or pressurisation used may be selected from 1.5, 2, 2.5, 3, 3.5, 4, 4.5, 5, 6, 7, 8, 9 or 10 bars of pressure. Preferably the force due to pressurisation is 2 bars (1 bar ≡ 100,000 Pa ≡ 100,000 N/m²).

The apparatus may be closed by affixing a pressure cap thereto. Preferably the pressure cap is screwed onto the top of the receptacle by means of a cooperating threaded surface. This has the advantage of allowing observation of the filtration process, which is not necessarily possible if the filtration apparatus is effectively invisible during the filtration process when it is in the sealed chamber of a centrifuge. Observation of the ongoing filtration process is highly desirable as it allows control of the process such that over concentration can be avoided.

Evacuation of a vessel is typically achieved by linking the vessel in fluid connection with a vacuum pump or evacuated volume, preferably via a pipe or conduit between the vessel and the vacuum source. The pump may be a syringe. Vacuum sources are typically available in laboratories. Multiple vessels may be evacuated simultaneously by linking the vessels in fluid connection to a vacuum manifold apparatus.

Receptacles suitable for evacuation may comprise a pipe or conduit in fluid connection with the interior of the receptacle. A check or non-return valve may be installed as part of the path of this fluid connection. Preferably the pipe or conduit is joined to an exit port of the vessel or receptacle, which is most preferably located in the base of the vessel or receptacle. Preferably the check or non-return valve is comprised in the pipe or conduit. Thus, advantageously, a multiplicity of filter apparatuses can be serially subjected to vacuum from a single vacuum line. An additional advantage is that a multiplicity of receptacles suitable for evacuation may be conveniently connected to a vacuum manifold so that multiple filtrations can be carried out at once.

The force due to evacuation may be measured in terms of Pascals (Pa), pounds per square inch (psi), bars, atmospheres, or torr. The degree of evacuation may be selected from 0.9, 0.8, 0.7, 0.6, 0.5, 0.4, 0.3, 0.2, 0.1, 0.01 or 0.001 bars of relative gaseous pressure.

Centrifugation of the apparatus may be used in concert with pressurisation or evacuation of the apparatus.

Pressurisation of the receptable may be used in concert with evacuation of the receptacle and/or the vessel wherein the pressurised and evacuated volumes in the receptacle are separated by the liquid being filtered by the device. This has the advantage of providing additional means of control as to the effective pressure urging the filtrate through the semi-permeable membranes. This also has the advantage of providing an effectively enhanced level of pressure without having to supply gas at increased pressure.

The device may be formed such that the semipermeable membrane may be located in spaced separation from the inner surface of the receptacle for centrifugation, and/or pressurisation or evacuation. The semipermeable membrane may be mounted on the device such that when the device is installed in the receptacle the semipermeable membrane is located in uniform spaced separation from the inner surface of the receptacle. Preferably the semipermeable membrane is substantially parallel to the inner surface of the receptacle. That is, preferably, the semipermeable membrane of the device follows the curvature or shape of the inner surface of the receptacle in which it is installed. This feature yields the benefit of low hold up volume.

The inner wall of the receptacle for centrifugation, and/or pressurisation or evacuation and the outer wall of the vessel may have matching forms such that the inner wall of the receptacle and the outer wall of the vessel lie in spaced separation. Preferably this clearance or separation distance is constant around the perimeter of the vessel. Thus the form and/or dimensions of the receptacle may be compatible with the form and/or dimensions of the vessel.

Preferably the perimeter is a circular circumference. Accordingly, preferably the receptacle has a substantially hollow cylindrical interior. Accordingly, preferably the vessel has a substantially cylindrical exterior surface. Preferably air can flow between the outer wall of the device and the inner wall of the receptacle. This has the advantage of allowing convenient insertion of the device in the receptacle for centrifugation, and/or pressurisation or evacuation.

The device may be formed such that separation distance between the inner surface of the receptacle for centrifugation, and/or pressurisation or evacuation and the semipermeable membrane may be 0.1mm, 0.2mm, 0.3mm, 0.4mm, 0.5mm, 0.75mm, 1 mm, but is not limited to these precise dimensions. Preferably the separation distance between the inner surface of the receptacle for centrifugation and the semipermeable membrane is 0.1mm.

The semipermeable membrane preferably forms a cylinder encompassing the interior volume of the vessel. This has the advantage of maximising the available area of semipermeable membrane.

A still further advantage is that the device allows minimal loss of sample by reverse filtration.

The advantage of a smaller separation distance is a lower hold-up volume (and therefore a better yield of concentrate). The hold-up volume is the volume of liquid remaining in the apparatus after collection of the filtrate that is effectively unrecoverable. Furthermore, a smaller separation distance has the advantage of maximising the volume of the vessel of the device in order to maximise the volume of eluate and reduce the number of filtration procedures required (e.g. the number of centrifugations required).

The elevated g forces may conveniently be provided by means of centrifugation of the assembly of parts.

Centrifugation may be carried out in a centrifuge equipped with a swinging bucket rotor whereby the centrifugal forces are applied effectively vertically (i.e. 90° to the axis or rotation) with respect to the assembly being centrifuged. An advantage of using a swinging bucket rotor is that the pressure of the liquid being filtered/processed is even on the surface of the semipermeable membrane comprised in a device described herein. This yields the attendant advantage improved or optimised flow characteristics and reduces the changes of blocking, fouling, or saturating the semipermeable membrane.

Centrifugation may be carried out in a centrifuge equipped with in a fixed angle rotor whereby the centrifugal forces are applied at a stable angle with respect to the assembly being centrifuged. The angle of centrifugation may be 23°, 24°, 25°, 26°, 27°, 28°, 29°, 30 °, 31°, 32°, 33°, 34°, 35°, 36°, 37°, 38°, 39°, 40°, 41°, 42°, 43°, 44°, 45°, 50°, 55°, 60°, 65°, 70°, 75°, 80° or 85° to the axis of rotation. Preferably the fixed angle of centrifugation is 45°.

Centrifugation may be carried out at 500-3000 g. Centrifugation may be carried out at 500 g, 600 g, 700 g, 800 g, 900 g, 1000 g, 1100 g, 1200 g, 1300 g, 1400 g, 1500 g, 1750 g, 2000 g, 2250 g, 2500 g, 2750 g, or 3000 g.

The portal may be wholly or partially covered by a semipermeable membrane. The portals may be covered by material that comprises a portion of semipermeable membrane. Preferably the portals are wholly covered by the semipermeable membrane.

The device may have 1, 2, 3, 4, 5, 6, 7 or 8 portals. Preferably the device has 1 or 4 portals.

A particular advantage of a planar semipermeable membrane that does not follow the internal form of the receptacle for centrifugation is that the manufacturing process for the device is simplified.

The number of portals and area of semipermeable membrane available for filtration may be varied in order to alter or optimise the flow rate (flux) and/or filtrate volume obtained. In this way the methods of the invention may be adapted to standard protocols and operating procedures where such parameters are required.

The advantage of a greater number of portals is thus that higher flow rates (flux) are yielded by enabling a greater area of semi-permeable membrane to be deployed for filtration.

An advantage of a lesser number of portals is that the strength of the vessel/device may be increased by minimising the number of weakened areas in the walls of the device. Similarly an advantage of a lesser number of portals is that the endurance of the device is optimised.

Accordingly, the portals may be regularly spaced in the walls of the vessel and preferably are each of the same size/dimensions in order to maximise the strength and/or endurance of the device under increased g forces.

An advantage of the vertically located semipermeable membrane is that methods and devices for concentrating macromolecules from a solution (e.g. by centrifugation or pressurisation of the filtering apparatus) are enabled but without filtering to the point of dryness of the semipermeable membrane. This yields the consequent advantage of recovering the optimum (maximal) amount of concentrated macromolecular retentate.

That is, filtration does not stop until the vessel of the device is full and/or the retentate meniscus in the vessel of the device matches the level of the meniscus of the reservoir of the retentate that is outside the vessel but inside the receptacle for centrifugation, and/or pressurisation or evacuation due to counter-balancing hydrostatic pressures. Accordingly, given that the volumes of liquids on either side of the membrane can be set to complete the filtration process while maintaining the level of the liquids above the top edge of the semipermeable membrane, it is possible to ensure that there is no duration of filtration that would cause dryness of the semipermeable membrane, even with extended centrifugation or pressurisation needed to allow for variation in individual membrane filtration rates. Accordingly, it is possible to produce devices of and allied protocols whereby filtration can conveniently proceed to equilibration rather than having to monitor the progress of filtration. Methods of the invention are conceived of whereby the amount of liquid to be processed and/or filtered, the volume of the filtration vessel and the volume of the receptacle for centrifugation, and/or pressurisation or evacuation are varied in concert to produce an embodiment of the invention whereby a set volume of liquid for processing can be added to an assembly described herein and centrifuged to the point of equilibration without having to take especial account of the progress of the filtration process.

Thus in methods described herein the parameters for processing the volume of liquid or suspension added to the receptacle for centrifugation, and/or pressurisation or evacuation installed in the receptacle for centrifugation may be not greater than the volume of the vessel of the device combined with the volume of the receptacle external to the installed device to the height of the upper limit of the portal of the device.

This has the advantage of allowing simultaneous processing of liquids with different speeds of filtration according to a method of the invention yet being able to arrange for the same end point of the centrifugation procedure with each of the varying samples at the same stage of filtration. This yields advantages in reliability and convenience of processing batches of samples and simplifying standard operating procedures for analytical or other purposes.

Furthermore, control of the volume of material to be filtered and automatic control of the end point of the filtration process through equilibrium allows there to be complete containment of biohazardous samples during centrifugal force-enhanced or pressure-enhanced filtration.

The inner filter device may have projections or other adornments for releasably securing the filter device to the cap. The cap of the centrifuge receptacle may have a central aperture shaped to allow the inner filter device to be suspended therefrom. Preferably the suspension is via wings on the upper portion of an upper tube of the filter device that can pass through the aperture of the cap and rest on the exterior of the replacement cap in order to suspend the filter device. This has the advantage of moving the filter device to be clear of the base of the receptacle and to provide a void into which the concentrate can be recovered conveniently by a further centrifugation step.

Also disclosed herein is a kit for carrying out a method of the invention. The kit may comprise a device as described herein. The kit may also comprise a receptacle for centrifugation, and/or pressurisation or evacuation as described herein.

The kit may comprise a device described herein pre-installed in a receptacle for centrifugation, and/or pressurisation or evacuation, preferably a centrifuge tube or laboratory tube as described herein.

Kits described herein have the advantage of convenience in carrying out a method of the invention and ensuring compatibility between co-operating components. Pre-installation of devices of the invention in receptacles for centrifugation, and/or pressurisation or evacuation has the advantage that the assembly may be supplied in a sterile condition. Alternatively, should semipermeable membranes be fragile or degradable with the need to be maintained in an inert atmosphere (e.g. nitrogen or argon) then the kits can be produced with these atmospheres. Similarly, if the semipermeable membranes need to be maintained in a moist or wet condition in an atmosphere saturated with water or other agent then the kits can be constructed with these conditions maintained in the sealed receptacle for centrifugation, and/or pressurisation or evacuation until the kit needs to be opened and used for filtration. Such kits may also have the advantage of being ready for use immediately without having to process or pre-prepare the semipermeable membranes or other components of the filtering apparatus.

Also described herein is an injection moulding tool for producing devices, or components thereof, for carrying out methods of the invention.

The injection moulding tool may comprise at least one cavity suitable for forming and/or producing devices for carrying out a method of the invention or components thereof.

Also described herein is the use of an injection moulding tool as described herein for producing devices, or components thereof, for carrying out a method of the invention.

Accordingly, devices for carrying out a method of the invention, or components thereof, may by manufactured by injection moulding methods. Preferably the devices of the invention or components thereof are made from plastics material. More preferably these are plastics materials which are characterised by low absorbance of protein, such as polypropylene and/or polycarbonate.

Injection moulding of devices described hereinis advantageous because it yields products with monolithic, consistent internal structure that minimises the occurrence of flaws or weak spots in the products that might occur in multi-part devices. Such flaws or weak spots might be exposed under centrifugation or differential pressure and result in failure of the device.

A semipermeable membrane may be attached to devices described herein by gluing the membrane into place. UV curable glues or cyanoacrylates may be used for this purpose.

The methods of manufacture of devices described herein, or components thereof, may comprise the step of applying semipermeable membrane to pre-determined portions of the injection moulding tool, closing the tool, admitting plastics material to the void formed by closing the tool, allowing the plastics material to solidify, and removing the product from the tool wherein the semipermeable membrane is incorporated and/or secured in the plastics material of the product in a pre-determined position.

This process yields the advantage of injection moulding of forming the device and incorporating the ultrafiltration membrane into the device in one step. This is known as over moulding (overmoulding) of the membrane. This may be achieved by applying the ultrafiltration membrane to the portion of the injection moulding tool intended to form the portal in the vessel of the device, then closing the tool and injecting plastics material into the tool such that the device is formed with the ultrafiltration membrane incorporated directly therein by virtue of the plastics material having contacted and set in contact with the ultrafiltration membrane, and removal of the device from the moulding tool. A further advantage flows from the backing material of the semipermeable membrane. Membranes that have a (typical) polypropylene backing naturally seals to the body of the device body during the moulding process.

The injection moulded components may comprise or consist of polypropylene. The support layer of the ultrafiltration membrane may comprise polypropylene; preferably the support later consists of polypropylene material.

Thus, the injection moulded components and the support layer of a device described herein, or components thereof, may both comprise polypropylene; preferably both consist of polypropylene material. Using substantially similar or identical materials for the injection moulded components and the support layer of the device, or components thereof, yields the advantage of the plastics material comprised in the injection moulded components and the support layer of filtration membrane being combined and/or melded during the moulding and thus sealing the membrane to the body of the device in one action. Providing such a polymer-to-polymer seal yields a significantly better and/or more reliable seal.

A further advantage is that a device for filtration is provided in which sealing of the semipermeable membrane to the injection moulded component does not require applying glue or other adhesives, or by ultrasonic welding of the ultrafiltration membrane to the injection moulded component. Thus, sealing the injection moulded components and the support layer of the device together obviates an additional step in the manufacturing process, with the consequent advantages of more efficient and/or reliable manufacture of the device.

The over moulding/sealing of the semipermeable membrane to the injection moulded component may be carried out at a temperature sufficient to melt the two polymers and thus meld/seal them together but not so great that the membrane surface is affected. Typically, the polypropylene components of semipermeable membranes can tolerate temperatures of 80°C. Therefore, suitably injection moulding of polypropylene is preferably carried out at 80°C, or approximately so.

Advantageously, the pressure required for over moulding by way of utilising injection moulding processes, as described herein, does not require the injected material to cause pressures to be applied to the ultrafiltration membrane that might compromise its integrity.

The injection moulding tool may be marked to show the location that the semipermeable membrane should be applied and/or fixed prior to closing the tool.

Also described herein is a kit comprising an injection moulding tool of the invention and compatible semipermeable membranes. Further described herein is a kit comprising an injection moulding tool of the invention and compatible semipermeable membranes pre-cut to the correct size for inclusion in the finished product.

An advantage of the components described herein being formed by injection moulding of plastics material is that they are of such low cost that they may be disposable after one use.

### Examples and Descriptions of the Drawings

The invention is now illustrated in the following specific embodiments with reference to the accompanying drawings showing:

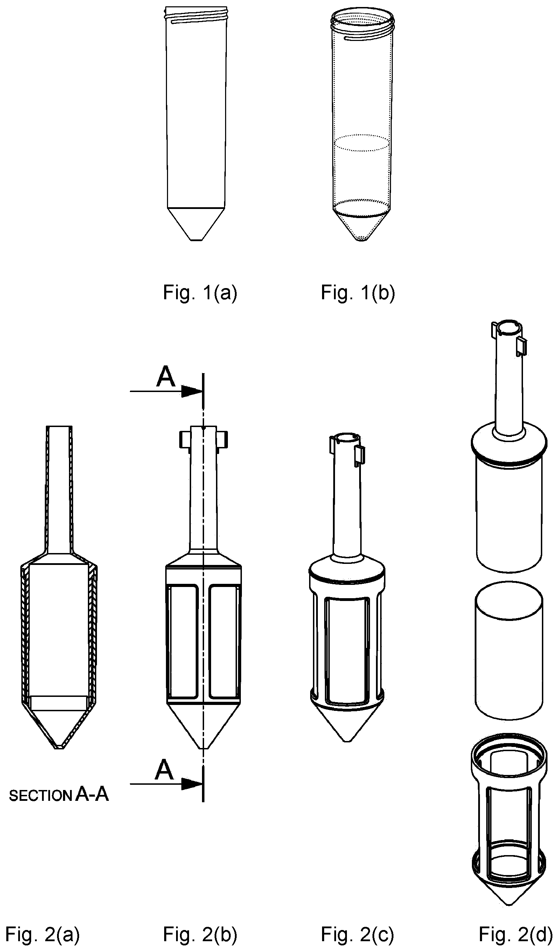

**FIG. 1** (a) is a side view of a standard laboratory centrifuge tube and (b) such a centrifuge tube containing a solution in readiness for a device for carrying out a method of the invention to be inserted into the tube.
**FIG. 2** (a) is a cross sectional view of an assembled filtration device for carrying out a method of the invention for insertion into a centrifuge tube along line A-A shown in (b). (b) is a side view of an assembled filtration device for carrying out a method of the invention for insertion into a centrifuge tube. (c) is an isometric view of an assembled filtration device for carrying out a method of the invention for insertion into a centrifuge tube. (d) is an exploded view of the filtration device showing the position of a cylinder of semi-permeable membrane within the device.

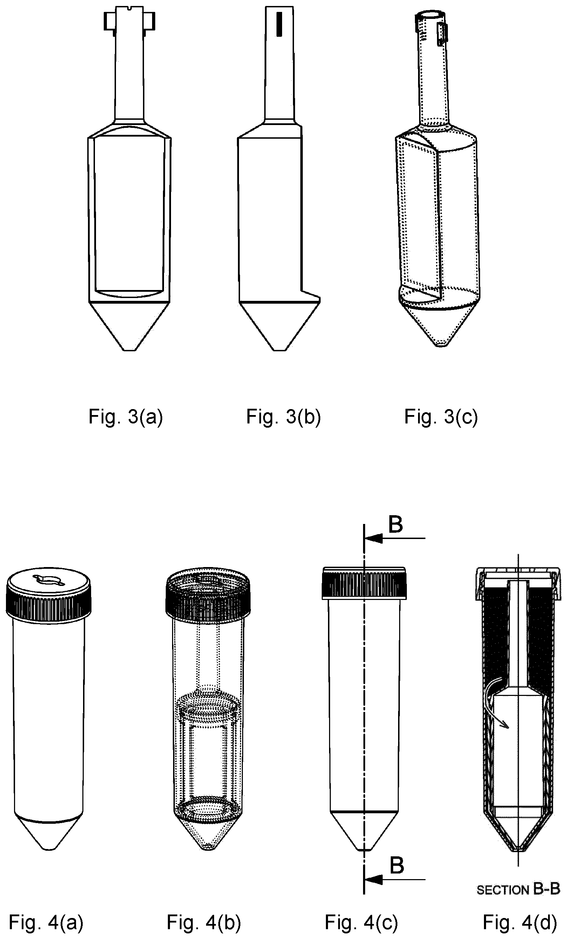

**FIG. 3** is an alternative embodiment wherein the semi-permeable membranes are mounted within the device to be vertical and flat, planar in form.
**FIG. 4** is a view of the device for carrying out a method of the invention inserted in a centrifuge tube as shown in Fig 1 wherein the device is also immersed in a liquid contained in the centrifuge tube. The liquid is shown in Fig. 4(d) by the black shaded areas. Thus Fig. 4(d) shows a cross sectional illustration of the assembly to be subjected to centrifugation in order to filter the liquid taken along line B-B of Fig. 4(c). The path of the filtrate from the upper to lower reservoirs through the filtration membrane of the device when it is subjected to centrifugation is shown by an arrow. Fig. 4(a) shows an external isometric view of the assembled components shown in Fig. 4(d) prior to centrifugation. Fig. 4(b) shows a wire-frame isometric view of the assembled components shown in Fig. 4(d) prior to centrifugation. Fig. 4(c) shows a side view of the assembled components shown in Fig. 4(d) prior to centrifugation.

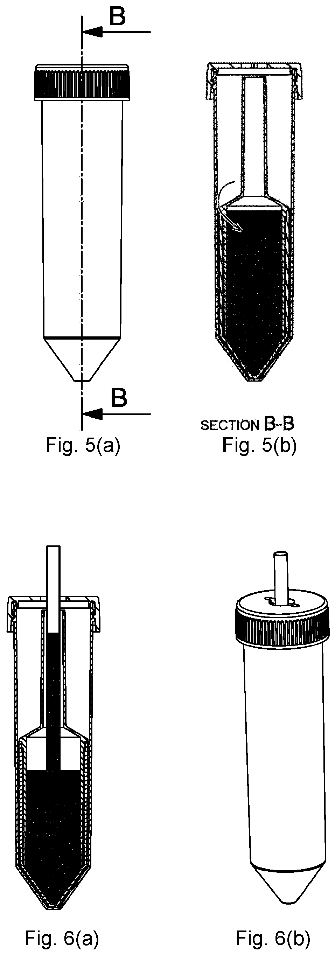

**FIG. 5**(a) shows a side view of the assembled components shown in Fig. 4(d) after centrifugation. Thus Fig. 5(b) shows a cross section of the assembly of Fig. 5(a) taken along line B-B with black shaded areas illustrating the location of the filtrate and retentate liquid following filtration. The path of the filtrate from the upper to lower reservoirs through the filtration membrane of the device for carrying out a method of the invention when it is subjected to centrifugation is illustrated by an arrow.
**FIG. 6**(a) shows a cross section of the assembly of Fig. 6(b) showing the position of the filtrate and retentate as the filtrate is removed from the filter vessel through a pipette inserted into the filtrate retaining vessel via an aperture in the cap of the centrifuge tube.

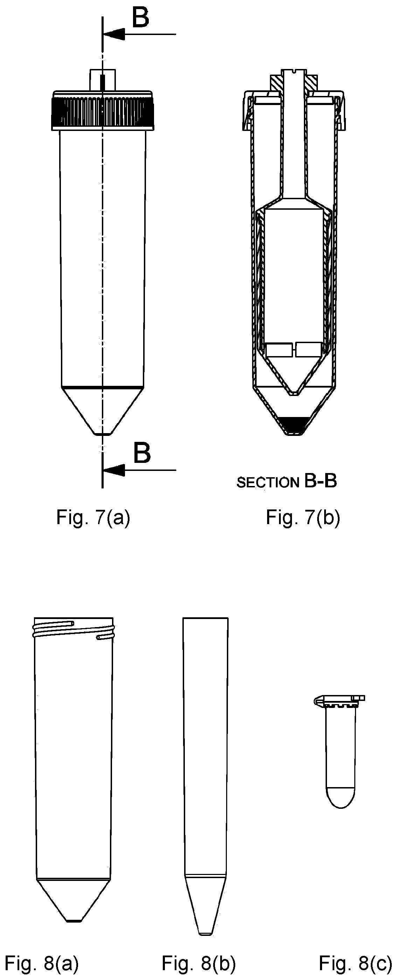

**FIG. 7**(a) shows a side view of a filtration device for carrying out a method of the invention suspended from the standard tube cap via projections supported by the outer surface of the centrifuge prior to recovery of the retentate (concentrate) portion of the filtered liquid by centrifugation of this assembly. Fig. 7(b) shows a cross section of the assembly of Fig. 7(a) taken along line B-B showing the base of the filter device held in spaced separation from the bottom surface of the centrifuge tube and the position of the retentate (concentrate) following recovery of this liquid by centrifugation of the assembly of Fig 7(a).
**FIG. 8** is an illustrative view of the 3 sizes of standard laboratory centrifuge tube for utilisation with the methods of the present invention.

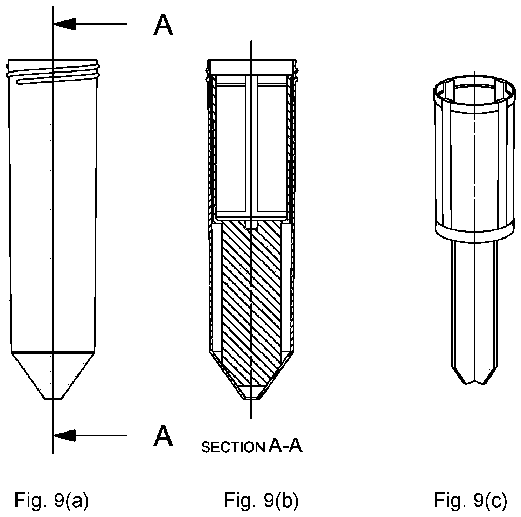

**FIG. 9**(a) shows a side view of the assembled components shown in Fig. 9(b). Fig. 9(c) shows a device for carrying out a method of the invention wherein the semipermeable membrane is retained in a cylindrical form substantially internal to the device. Fig. 9(b) shows a cross sectional view of the device of Fig. 9(c) inserted into the tube of Fig. 9(a) along line A-A of Fig. 9(a).

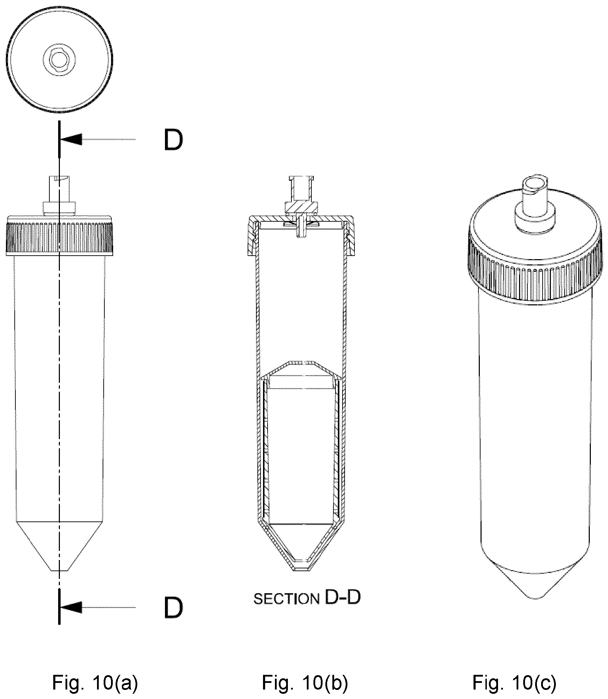

**FIG. 10**(a) shows a side view (lower diagram) and top view (upper diagram) of the assembled components shown in Fig. 10(b). Thus Fig. 10(b) shows a cross section of the assembly of Fig. 10(a) taken along line D-D. The cross-section shows a vessel for filtration with semipermeable membranes supported on an O-ring seal sitting in the conical base of the receptacle, wherein the receptacle and vessel both have aligned exit ports at their lowest points. Also shown is a screw-top pressure cap attached to the receptacle having a Luer fitting to pressurise the tube and a non-return/check valve. Fig. 10(c) shows an isometric view from the top of the assembly of Fig. 10(a).

### EXAMPLES

### Introduction

A range of laboratory experiments have been conducted in order to evaluate the filtration performance of the system according to the invention. Comparisons have been made with equivalent commercially available devices (CAD) of similar volume capacities. Filtration devices had 25 ml. capacity and contained a membrane with 10,000 (Daltons) molecular weight cut off. These were filled with 25 ml of a solution containing of Bovine Serum Albumen (BSA) of varying concentration levels: low, medium, and high. The devices were run at 2,500 g centrifugation rating. A total of 10 devices were run in each case to monitor intra-experimental variance.

In addition a fermentation broth containing bacteria was processed. Again CAD were compared to the new patent applied invention.

### Example A

### Method

A 50 ml capacity centrifuge tube with *g* force selection criteria enabled was employed to drive the filter systems in each case for this example. A swing out rotor arm was used to hold the tubes and a 2,500 g selected as a standard setting. Filtration devices were inserted in the centrifuge tubes to provide an assembly of parts to carry out the filtration process as shown in Figure 4(b) and 4(d). The devices were otherwise prepared with no prefiltration directly from supply and no pre-treatment was used.

Filtration was carried out according to the steps of the protocol set out below:

| | |
|---|---|
| *Step 1*: | Remove the screw-cap lid from the 50ml (L; large) or 15ml (M; medium) centrifuge tube and open the assembly. The assembly comprises the filtration device inserted in the centrifuge tube. |
| *Step 2:* | an optional initial membrane wash can be conducted by pipetting 10ml (L) / 3ml (M) of distilled water into the outer section of the assembly and spinning at 2500rpm for 1 minute (typically 500-3000 g). The wash water is then |
| | discarded. |
| *Step 3:* | Pipette up to 20ml (for 50ml large tubes) / 6ml (for 15 ml medium tubes) of the sample to be concentrated into the outer section of the assembly. |
| *Step 4:* | Screw the lid of the assembly back on tightly. |
| *Step 5:* | Once sample has been added to all assemblies to be subjected to centrifugation the assemblies should be balanced by weight to ensure the centrifuge works efficiently and to minimise safety risks to operator or the samples being processed. |
| *Step 6:* | Place the assemblies into a centrifuge and run at 2500 rpm for approximately 20-30 minutes (typically 500-3000 g), depending on the sample solution initial concentration and the molecular-weight cut-off (MWCO) of the semipermeable (ultrafiltration) membrane. Typically semipermeable membranes yielding a MWCO of 3,000, 10,000, 30,000 or 100,000 Daltons are used in the context of the device assemblies. |
| | The volume of the filtrate resulting from centrifugation is expected to be approximately 19.4 ml for the 50ml (L; large) and 5.7 mL for the 15ml (M; medium) centrifuge tube assemblies. The volume of the concentrate resulting from centrifugation is expected to be approximately 0.6 ml for the 50ml (L; large) and 0.3 ml for the 15ml (M; medium) centrifuge tube assemblies, depending on the sample solution initial concentration and the molecular-weight cut-off (MWCO) of the semipermeable (ultrafiltration) membrane. |
| *Step 7:* | After centrifugation, remove the assemblies from the centrifuge and open the lids. Pour off the filtrate from the inner volume of the filter device and remove the concentrate from the bottom of the centrifuge tube. If further concentration is required, then the concentrate may be left in the assembly and the assembly centrifuged at the acceleration noted above for another 20-30 minutes. |
| *Step 8:* | Optionally, to increase concentration yet further, the filtrate can be removed, and the assembly centrifuged for another 20-30 minutes. |
| *Step 9:* | Remove the filtrate from the assembly. This may be done by using a pipette. |
| *Step 10:* | To recover the concentrate from the assembly, first, the screw cap lid is removed and replaced with a sample recovery lid. |
| | The sample recovery lid has a central hole in the surface of the cap and for |
| | slots extending radially at 0°, 90°, 180° and 270° wherein the length of the slots are slightly longer than the length of the suspending projections of the upper tube of the filtration device such that the projections and the portion of the upper tube the projections are attached to can be passed through the sample recovery lid. In an alternative version of the sample recovery lid two slots extend radially at 0° and 180° from the central hole. |
| | Next, the user should carefully pull the inserted filtration device up and out of the centrifuge tube and install a sample recovery lid on the upper portion of the cultivation device in the manner described above and then turn the device 45° with respect to the sample recovery lid (or 90° for the alternative version of the sample recovery lid) for such that the filtration device is suspended from the sample recovery lid by the projections of the upper portion of the filtration device. Reinsert the alteration device in the centrifuge tube and then securely screw the sample recovery lid onto the centrifuge tube. |
| *Step 11*: | The assemblies should be balanced again by weight before placing them back into the centrifuge. |
| *Step 12:* | Centrifuge the assemblies for up to 3 minutes at a maximum speed of 2000rpm to facilitate sample recovery. |
| *Step 13:* | Remove the assemblies from the centrifuge and remove the sample recovery lid. |
| *Step 14:* | Carefully remove the filtration device from the centrifuge tube. |
| *Step 15:* | Recover the concentrate from the Tube, e.g. by using a pipette or store the concentrate in the centrifuge tube for later use by screwing an original screw cap for the centrifuge back on. |

### Experimental Results

### Example 1 - Dilute Protein Solution - starting concentration 0.1 mg / ml.

In a test of 10 filtration devices, which that are the subject of this Example and are disclosed herein, to process a dilute protein solution with starting concentration 0.1 mg/ml, the filtration rates (flux) in mL per minute set out in Table 1, below, were obtained.

**Table 1**

| Device number | 1 | 2 | 3 | 4 | 5 | 6 | 7 | 8 | 9 | 10 |
|---|---|---|---|---|---|---|---|---|---|---|
| Filtration rate | 1.11 | 1.05 | 1.10 | 1.10 | 1.08 | 1.11 | 1.12 | 1.11 | 1.02 | 1.09 |

The mean filtration rate over these 10 examples was 1.089 ml/min.

The total processing time required to reach a concentration factor of 50× averaged 23 minutes.

By way of contrast, a standard commercial device was tested using the same conditions and protocol as for the filtration devices that are the subject of this specification. For the purposes of comparison this test was also carried out 10 times and the results are collated in Table 2, below.

**Table 2**

| Commercial Device number | 1 | 2 | 3 | 4 | 5 | 6 | 7 | 8 | 9 | 10 |
|---|---|---|---|---|---|---|---|---|---|---|
| Filtration rate | 0.31 | 0.36 | 0.40 | 0.22 | 0.28 | 0.38 | 0.33 | 0.41 | 0.32 | 0.29 |

The mean filtration rate over these 10 examples was 0.33 ml./min.

The total processing time required to reach a concentration factor of 50× averaged 76 minutes.

These data show that a concentration procedure for a dilute protein solution utilising a filtration device as described herein will outperform a standard commercial product by approximately threefold. Without wishing to be bound by theory it appears that this advantage flows from the benefits provided by the device described herein possessing increased membrane area, the membrane contact time during processing being optimised, and improved flow characteristics resulting in lower fouling of the semipermeable membrane.

### Example 2 - Medium Concentration Protein Solution - 1 mg / ml.

In a test of 10 filtration devices, which that are the subject of this Example and are disclosed herein, to process a "medium" protein solution with starting concentration 1 mg/ml, the filtration rates (flux) in mL per minute set out in Table 3, below, were obtained.

**Table 3**

| Device Number | 1 | 2 | 3 | 4 | 5 | 6 | 7 | 8 | 9 | 10 |
|---|---|---|---|---|---|---|---|---|---|---|
| Filtration Rate | 0.71 | 0.75 | 0.71 | 0.81 | 0.80 | 0.73 | 0.72 | 0.72 | 0.74 | 0.81 |

The mean filtration rate over these 10 examples was 0.75 ml./min.

The total processing time required to reach a concentration factor of 50× averaged 32 minutes.

By way of contrast, a standard commercial device was tested using the same conditions and protocol as for the filtration devices that are the subject of this specification. For the purposes of comparison this test was also carried out 10 times and the results are collated in Table 4, below.

**Table 4**

| Commercial Device number | 1 | 2 | 3 | 4 | 5 | 6 | 7 | 8 | 9 | 10 |
|---|---|---|---|---|---|---|---|---|---|---|
| Filtration rate | 0.27 | 0.25 | 0.28 | 0.28 | 0.26 | 0.24 | 0.25 | 0.27 | 0.29 | 0.28 |

The mean filtration rate over these 10 examples was 0.267 ml./min.

The total processing time required to reach a concentration factor of 50× averaged 90 minutes.

These data show that a concentration procedure for a medium concentration protein solution utilising a filtration device as described herein will outperform a standard commercial product by approximately threefold.

### Example 3 - High concentration Protein solution - 10 mg / ml.

In a test of 10 filtration devices, which that are the subject of this Example and are disclosed herein, to process a "high" protein solution with starting concentration 10 mg/ml, the filtration rates (flux) in mL per minute set out in the Table 5, below, were obtained.

**Table 5**

| Device number | 1 | 2 | 3 | 4 | 5 | 6 | 7 | 8 | 9 | 10 |
|---|---|---|---|---|---|---|---|---|---|---|
| Filtration rate | 0.66 | 0.65 | 0.63 | 0.63 | 0.68 | 0.63 | 0.67 | 0.67 | 0.64 | 0.62 |

The mean filtration rate over these 10 examples was 0.65 ml./min.

The total processing time required to reach a concentration factor of 50× averaged 38 minutes.

By way of contrast, a standard commercial device was tested using the same conditions and protocol as for the filtration devices that are the subject of this specification. For the purposes of comparison this test was also carried out 10 times and the results are collated in Table 6, below.

**Table 6**

| Commercial Device number | 1 | 2 | 3 | 4 | 5 | 6 | 7 | 8 | 9 | 10 |
|---|---|---|---|---|---|---|---|---|---|---|
| Filtration rate | 0.21 | 0.24 | 0.20 | 0.20 | 0.20 | 0.19 | 0.22 | 0.22 | 0.19 | 0.18 |

The mean filtration rate over these 10 examples was 0.20 ml./min.

The total processing time required to reach a concentration factor of 50× averaged 125 minutes.

These data show that a concentration procedure for a higher concentration protein solution utilising a filtration device as described herein will outperform a standard commercial product by approximately threefold.

### Example 4 - Heavily laden fermentation broth concentration of E. Coli bacteria.

A viscous fermentation broth was prepared. Essentially the broth was a protein solution with a protein concentration of approximately 90 mg/ml.

This broth was introduced into the filtration devices, which that are the subject of this specification and are disclosed herein, for concentration according to the protocol given above. After a 30-minute centrifugation, 8 ml of protein-free filtrate was produced by these filtration devices.

By way of contrast, a standard commercial device was also tested using the same conditions and protocol. This commercial product did not function effectively because of fouling of the semipermeable membrane by the constituents of the fermentation broth. Accordingly, only a small volume (1 ml.) of filtrate was obtained when using these commercially available devices.

From these results we conclude that a concentration procedure for a fermentation broth utilising a filtration device as described herein will significantly outperform a standard commercial product. Indeed, we conclude that a filtration device as described herein will function effectively under conditions where a standard commercial product will not.

Without wishing to be bound by theory, it appears that this significant advantage flows from the benefits provided by the device described herein having a tube of semipermeable membrane which essentially floats in the broth. The presence of this tube means that a concentration polarisation layer (i.e. the cause of fouling) did not occur to the extent that effective fouling did not occur.

Furthermore, the concentrated broth was seen to precipitate and migrate to the bottom of the collection vessel. Micelles or other similarly relatively large constituents of fermentation broths or other biological extracts behave in a similar manner.

### Example B

### Method

A screw-cap laboratory tube with a conical base was employed in each of the cases in this example. The screw cap of the laboratory tubes has a centrally located fitting to allow attachment of a supply of pressurised gas to pressurise the interior of the laboratory tube when the pressurised gas is admitted to the laboratory tube. The fitting is a standard Luer (6% taper) to which a pipe with a cooperating Luer fitting or syringe can be connected in order to supply gas under pressure.

The laboratory tube also comprises a filtrate drain hole at the tip of the conical base. Filtration devices were inserted in the laboratory tubes to provide an assembly of parts to carry out the filtration process as shown in Fig. 10. The external diameter of the device closely matches the internal diameter of the laboratory tube but with sufficient space between for the device to be slidably installable in the laboratory tubes. Accordingly, the filtration devices have a conical base to match the base of the laboratory tubes and also comprises a filtrate drain hole at the tip of the conical base. The devices also comprises a filtrate drain hole at the tip of the conical base. An annular seal is located on the interior of the conical part of the laboratory tube such that installation of the device in the laboratory tube seats the conical part of the device in the circular seal and thus a barrier seal is provided between the upper sample reservoir and the volume leading to the drain hole at the tip of the conical base. The devices were otherwise prepared with no prefiltration directly from supply and no pre-treatment was used.

Filtration was carried out according to the steps of the protocol set out below:

| | |
|---|---|
| *Step 1:* | Remove the screw-cap lid from the 50ml (L; large) or 15ml (M; medium) laboratory tube and open the assembly. The assembly comprises the filtration device inserted in the laboratory tube. |
| *Step 2:* | an optional initial membrane wash can be conducted by pipetting 10ml (L) / |
| | 3ml (M) of distilled water into the outer section of the assembly, screwing the lid of the assembly back on tightly, connecting the fitting on the lid to a supply of nitrogen gas under pressure and pressurising the assembly at a pressure of 2 bar (1 bar ≡ 100,000 Pa ≡ 100,000 N/m²) for 2 minutes. The wash water is then discarded. |
| *Step 3:* | Remove the screw-cap lid. |
| *Step 4:* | Pipette up to 20ml (for 50 ml large tubes) / 6 ml (for 15 ml medium tubes) of the sample to be concentrated into the upper section of the assembly and. |
| *Step 5:* | Screw the lid of the assembly back on tightly and attach a supply of pressurised nitrogen gas to the assembly via the Luer fitting on the screw-cap lid. |
| *Step 6:* | Nitrogen is then admitted to the assembly at a pressure of 2 bar and the pressure maintained for approximately 5-30 minutes, depending on the sample solution initial concentration and the molecular-weight cut-off (MWCO) of the semipermeable (ultrafiltration) membrane. This causes the filtrate to move through the semipermeable membranes into the space within the device in the lower section of the assembly to be recovered via the filtrate drain holes at the tip of the conical sections of the device and laboratory tube. Concentrate is retained in the outer section of the assembly above the annular seal. |
| | Typically semipermeable membranes yielding a MWCO of 3,000, 10,000, 30,000 or 100,000 Daltons are used in the context of the device assemblies. |
| | The volume of the filtrate resulting from filtering according to this method is expected to be approximately 19.4 ml for the 50ml (L; large) and 5.7 mL for the 15ml (M; medium) laboratory tube assemblies. The volume of the concentrate resulting from filtration according to this method is expected to be approximately 0.6 ml for the 50ml (L; large) and 0.3 ml for the 15ml (M; medium) laboratory tube assemblies, depending on the sample solution initial concentration and the molecular-weight cut-off (MWCO) of the semipermeable (ultrafiltration) membrane. |
| *Step 7:* | After pressurisation and filtration have been carried out, the pressure is released, and the lids opened. The filtrate from the inner volume of the filter device was recovered during pressurisation. Removal of the device |
| from its seat in the bottom of the laboratory tube breaks the seal and releases the concentrate in the bottom of the centrifuge tube where it may be recovered via the drain hole. | |

### Experimental Results

Use of the embodiments of the invention described in Example 2 yields similar results to the parallel embodiments of the invention described in Example 1.

The invention thus provides improved methods for chemistry, biochemistry, molecular biology, biology, genetics at and/or physiology for selectively filtering molecules and macromolecules from liquid solutions. In particular the present invention provides methods of this type and function that operate by the filtrate being moved through a semipermeable membrane, such as an ultrafiltration membrane, by the action of accelerative forces such as those provided by centrifuge or the pressure of a gas. In this way the invention relates to a method for the filtration of a fluid by facilitating the flow of filtrate from a reservoir outside the device (typically in the receptacle for centrifugation) to the inside portion ("vessel") of the device. The disclosure also relates to methods and tools for manufacture of devices for carrying out a method of the invention.

## Claims

1. A method for processing liquids or suspensions comprising the steps of:
installing a device in a cooperating receptacle for pressurisation, evacuation and/or acceleration by centrifugation, wherein the device comprises:
a vessel with side walls and a base;
wherein the side walls of the vessel comprise at least one portal;
wherein the portal is partially or wholly covered by an ultrafiltration membrane comprising a filtering surface;
wherein the ultrafiltration membrane comprises a semi-permeable, polymeric membrane layer cast onto a backing material, which provides support for the semi-permeable polymeric membrane layer;
wherein the ultrafiltration membrane is located vertically with respect to the receptacle when the device is installed in the receptacle and
the filtering surface of the ultrafiltration membrane faces externally with respect to the interior of the vessel,
adding the liquid or suspension for processing to the receptacle; and
subjecting the resulting assembly of parts to centrifugation, increased *g* forces, vacuum and/or pressurisation thus facilitating a flow of filtrate from the receptacle to the interior of the vessel.

2. A method according to claim 1, additionally comprising the step of immersing the device in the liquid or suspension for processing.

3. A method according to claim 1 or claim 2, wherein the base of the device is sealed.

4. A method according to any preceding claim, wherein the ultrafiltration membrane of the device has a molecular-weight cut-off of 3,000, 10,000, 30,000 or 100,000 unified atomic mass units.

5. A method according to any preceding claim, wherein the ultrafiltration membrane of the device is mounted on the device such that when the device is installed in the receptacle, the ultrafiltration membrane is located in uniform spaced separation from the inner surface of the receptacle.

6. A method according to any preceding claim, wherein the ultrafiltration membrane of the device follows the shape of the inner surface of the receptacle.

7. A method according to any preceding claim, wherein the separation distance between the inner surface of the receptacle and the ultrafiltration membrane of the device is 0.1mm, 0.2mm, 0.3mm, 0.4mm, 0.5mm, 0.75mm, or 1mm.

8. A method according to any preceding claim, wherein the centrifugation is carried out in a centrifuge with a swinging-bucket rotor.

9. A method according to any preceding claim, wherein the volume of liquid or suspension for processing added to the device installed in the receptacle is not greater than the volume of the vessel of the device combined with the volume of the receptacle external to the installed device to the height of the upper limit of the portal of the device.

10. A method according to claim 9, wherein the method comprises the step of centrifugation and/or pressurisation of the assembly of parts until the liquid levels within the vessel and within the receptacle reach equilibrium.

## Patentansprüche

1. Verfahren zum Verarbeiten von Flüssigkeiten oder Suspensionen, umfassend die folgenden Schritte:
Installieren einer Vorrichtung in einem zusammenwirkenden Behälter zur Druckbeaufschlagung, Evakuierung und/oder Beschleunigung durch Zentrifugation, wobei die Vorrichtung Folgendes umfasst:
ein Gefäß mit Seitenwänden und einer Basis;
wobei die Seitenwände des Gefäßes mindestens einen Zugang umfassen;
wobei der Zugang teilweise oder vollständig von einer Ultrafiltrationsmembran bedeckt ist, die eine Filterfläche umfasst;
wobei die Ultrafiltrationsmembran eine halbdurchlässige, polymere Membranschicht umfasst, die auf ein Trägermaterial gegossen ist, das Unterstützung für die halbdurchlässige polymere Membranschicht bereitstellt;
wobei sich die Ultrafiltrationsmembran senkrecht in Bezug auf den Behälter befindet, wenn die Vorrichtung in dem Behälter installiert ist, und
die Filterfläche der Ultrafiltrationsmembran in Bezug auf das Innere des Gefäßes nach außen weist,
Hinzufügen der Flüssigkeit oder Suspension zum Verarbeiten in den Behälter; und
Unterziehen der resultierenden Anordnung von Teilen einer Zentrifugation, erhöhten g-Kräften, einem Vakuum und/oder einer Druckbeaufschlagung, wodurch ein Filtratfluss aus dem Behälter in das Innere des Gefäßes erleichtert wird.

2. Verfahren nach Anspruch 1, zusätzlich umfassend den Schritt des Eintauchens der Vorrichtung in die Flüssigkeit oder Suspension zum Verarbeiten.

3. Verfahren nach Anspruch 1 oder Anspruch 2, wobei die Basis der Vorrichtung abgedichtet ist.

4. Verfahren nach einem vorhergehenden Anspruch, wobei die Ultrafiltrationsmembran der Vorrichtung eine Molekulargewicht-Grenze von 3.000, 10.000, 30.000 oder 100.000 atomaren Masseneinheiten aufweist.

5. Verfahren nach einem vorhergehenden Anspruch, wobei die Ultrafiltrationsmembran der Vorrichtung so an der Vorrichtung montiert ist, dass, wenn die Vorrichtung in dem Behälter installiert ist, wobei sich die Ultrafiltrationsmembran in einer gleichmäßig beabstandeten Trennung von der Innenfläche des Behälters befindet.

6. Verfahren nach einem vorhergehenden Anspruch, wobei die Ultrafiltrationsmembran der Vorrichtung der Form der Innenfläche des Behälters folgt.

7. Verfahren nach einem vorhergehenden Anspruch, wobei der Trennungsabstand zwischen der Innenfläche des Behälters und der Ultrafiltrationsmembran der Vorrichtung 0,1 mm, 0,2 mm, 0,3 mm, 0,4 mm, 0,5 mm, 0,75 mm oder 1 mm beträgt.

8. Verfahren nach einem vorhergehenden Anspruch, wobei die Zentrifugation in einer Zentrifuge mit einem Schwenkbecherrotor durchgeführt wird.

9. Verfahren nach einem vorhergehenden Anspruch, wobei das Flüssigkeits- oder Suspensionsvolumen zum Verarbeiten, das der in dem Behälter installierten Vorrichtung hinzugefügt wird, nicht größer ist als das Volumen des Gefäßes der Vorrichtung kombiniert mit dem Volumen des Behälters außerhalb der installierten Vorrichtung bis zur Höhe der oberen Grenze des Zugangs der Vorrichtung.

10. Verfahren nach Anspruch 9, wobei das Verfahren den Schritt der Zentrifugation und/oder Druckbeaufschlagung der Anordnung von Teilen umfasst, bis die Flüssigkeitsniveaus innerhalb des Gefäßes und innerhalb des Behälters ein Gleichgewicht erreichen.

## Revendications

1. Procédé de traitement de liquides ou de suspensions comprenant les étapes de :
installation d'un dispositif dans un réceptacle coopérant à des fins de pressurisation, d'évacuation et/ou d'accélération par centrifugation, dans lequel le dispositif comprend :
un récipient avec des parois latérales et une base ;
dans lequel les parois latérales du récipient comprennent au moins un orifice ;
dans lequel l'orifice est partiellement ou entièrement recouvert par une membrane d'ultrafiltration comprenant une surface filtrante ;
dans lequel la membrane d'ultrafiltration comprend une couche de membrane polymère semi-perméable coulée sur un matériau de support, qui fournit un support pour la couche de membrane polymère semi-perméable ;
dans lequel la membrane d'ultrafiltration est située verticalement par rapport au réceptacle lorsque le dispositif est installé dans le réceptacle et
la surface filtrante de la membrane d'ultrafiltration est tournée vers l'extérieur par rapport à l'intérieur du récipient,
l'ajout du liquide ou de la suspension à traiter dans le réceptacle ; et
la soumission de l'ensemble de pièces résultant à une centrifugation, à une augmentation des forces g, à un vide et/ou à une mise sous pression, facilitant ainsi un écoulement de filtrat depuis le réceptacle jusqu'à l'intérieur du récipient.

2. Procédé selon la revendication 1, comprenant en outre l'étape d'immersion du dispositif dans le liquide ou la suspension à traiter.

3. Procédé selon la revendication 1 ou la revendication 2, dans lequel la base du dispositif est scellée.

4. Procédé selon l'une quelconque des revendications précédentes, dans lequel la membrane d'ultrafiltration du dispositif a un seuil de coupure de poids moléculaire de 3 000, 10 000, 30 000 ou 100 000 unités de masse atomique unifiées.

5. Procédé selon l'une quelconque des revendications précédentes, dans lequel la membrane d'ultrafiltration du dispositif est montée sur le dispositif de telle sorte que lorsque le dispositif est installé dans le réceptacle, la membrane d'ultrafiltration se trouve en séparation espacée uniforme de la surface interne du réceptacle.

6. Procédé selon l'une quelconque des revendications précédentes, dans lequel la membrane d'ultrafiltration du dispositif suit la forme de la surface intérieure du réceptacle.

7. Procédé selon l'une quelconque des revendications précédentes, dans lequel la distance de séparation entre la surface intérieure du réceptacle et la membrane d'ultrafiltration du dispositif est de 0,1 mm, 0,2 mm, 0,3 mm, 0,4 mm, 0,5 mm, 0,75mm ou 1 mm.

8. Procédé selon l'une quelconque des revendications précédentes, dans lequel la centrifugation est effectuée dans une centrifugeuse avec un rotor à godet oscillant.

9. Procédé selon l'une quelconque des revendications précédentes, dans lequel le volume de liquide ou de suspension à traiter ajouté au dispositif installé dans le réceptacle n'est pas supérieur au volume du récipient du dispositif combiné au volume du réceptacle extérieur au dispositif installé à la hauteur de la limite supérieure de l'orifice du dispositif.

10. Procédé selon la revendication 9, dans lequel le procédé comprend l'étape de centrifugation et/ou de pressurisation de l'ensemble de pièces jusqu'à ce que les niveaux de liquide à l'intérieur du récipient et à l'intérieur du réceptacle atteignent l'équilibre.
